# EUROPÄISCHE PATENTSCHRIFT

(11) **EP 2 053 428 B1**
(45) Veröffentlichungstag und Bekanntmachung des Hinweises auf die Patenterteilung: **24.08.2011**
(21) Anmeldenummer: 08105600.4
(22) Anmeldetag: 20.10.2008
(51) Int. Cl.: G01V 8/20

(54) **Optoelektronischer Sensor**
Optoelectronic sensor
Capteur optoélectronique

(30) Priorität: 26.10.2007 DE 102007051681
(43) Veröffentlichungstag der Anmeldung: 29.04.2009
(73) Patentinhaber: SICK AG, 79183 Waldkirch (DE)
(72) Erfinder: Kietz, Daniel, 79359, Riegel (DE); Hirt, Günter, 77790, Steinach (DE); Runge, Wolfram, 79104, Freiburg (DE)
(74) Vertreter: Ludewigt, Christoph

(56) Entgegenhaltungen:
- EP-A- 1 574 880
- EP-A- 1 752 795
- WO-A-97/26752
- DE-U1-202005 003 051
- US-A1- 2002 043 633

## Beschreibung

Die Erfindung betrifft einen optoelektronischen Sensor insbesondere eine Lichtschranke oder ein Lichtgitter nach dem Oberbegriff des Anspruchs 1.

Lichtgitter werden in großem Umfang für die Erkennung und Vermessung von Gegenständen auf Förderbahnen, zur Gepäckkontrolle auf Förderbändern, zur Türsteuerung in Aufzügen, für den Hand- oder Körperschutz bei Arbeitsmaschinen, für die Zugangskontrolle von Personen und Fahrzeugen usw. verwendet. Die Lichtgitter bestehen aus in einem leistenförmigen Gehäuse beabstandet angeordneten Sende-Einheiten und in einem leistenförmigen Gehäuse entsprechend beabstandet angeordneten Empfangs-Einheiten. Die Sende-Einheiten senden Lichtstrahlen, im Allgemeinen Infrarot-Licht, aus, welches auf die Empfangs-Einheiten auftrifft. Die Unterbrechung der Lichtstrahlen wird detektiert und ausgewertet.

Die Sende-Einheiten und die Empfangs-Einheiten bestehen jeweils aus einem optoelektronischen Element und einem in Strahlrichtung von diesem beabstandeten optischen Funktionselement. Bei der Sende-Einheit sendet ein optoelektronischer Wandler Licht aus, welches durch das optische Funktionselement, eine Linse oder eine Blende, auf die entsprechende Empfangs-Einheit gebündelt wird. Die Empfangs-Einheit weist ein entsprechendes optisches Funktionselement auf, welches das Licht auf einem optoelektronischen Wandler sammelt.

Derartige optoelektronische Sensoreinrichtungen sind aus der DE 20 2005 003 051 U1 bekannt und werden auch verwendet, um zum Beispiel einen Zugangsbereich an einer gefahrbringenden Werkzeugmaschine zu überwachen.

Dabei ist es von der Aufgabenstellung der Überwachung des Zugangsbereiches abhängig, welche Objekte innerhalb einer Überwachungsstrecke als unzulässig erkannt werden sollen. Soll nur der Durchgang einer Person erfasst werden, so kann dies mit einer einzelnen Lichtschranke, die sich in einem bestimmten Abstand über dem Fußboden befindet, geschehen. Soll dagegen das Eingreifen eines Armes in einen Gefahrenbereich erfasst werden, ist es erforderlich, mehrere Lichtstrahlen relativ dicht nebeneinander anzuordnen. Man spricht in diesen Fällen von einem Lichtgitter oder Sicherheitslichtgitter.

Die bekannten optoelektronischen Sensoreinrichtungen arbeiten dabei nach dem Einwegprinzip, d. h. in einem ersten Gehäuse auf einer Seite der Überwachungsstrecke bzw. Überwachungsfläche sind ein oder mehrere Lichtsender angeordnet und auf der gegenüberliegenden Seite der Überwachungsstrecke bzw. Überwachungsfläche befinden sich in einem zweiten Gehäuse ein oder mehrere Lichtempfänger. Der bzw. die Lichtsender kommunizieren dabei nach einem genauen vorgegebenen Timing mit dem bzw. den Lichtempfängern, so dass jeweils Paare von Lichtsendern / Lichtempfängern aktiv sind.

Der Begriff "Licht" ist hierbei nicht auf das sichtbare Licht beschränkt. Unter dem Begriff "Licht" sind ganz allgemein jene elektromagnetischen Strahlen, also vom UV-Licht über den sichtbaren Bereich bis zum IR-Licht zu verstehen, die üblicherweise für den Betrieb von Lichtschranken und Lichtgittern eingesetzt werden.

Speziell dann, wenn diese optoelektronischen Sensoreinrichtungen eine hohe Sicherheitsanforderung erfüllen müssen oder bei messenden Lichtgittern für die Automatisierungstechnik hohe Anforderungen an eine einwandfreie Erkennung gestellt werden, ist es notwendig, dass die Überwachungsaufgabe nicht durch unerwünschte Nebeneffekte außer Kraft gesetzt wird. Eine mögliche Gefahr einer derartigen unerwünschten Nebenwirkung besteht darin, dass ein merklicher Anteil des gerade aktiven Lichtstrahles eines Lichtsender/Lichtempfänger-Paares um ein Objekt, das eigentlich durch Unterbrechung des Lichtstrahles erkannt werden sollte, den Empfänger durch Umspiegelung erreicht. Das hat dann zur Folge, dass dieses Objekt nicht erkannt wird.

Um Umspiegelungen wirksam zu vermeiden, darf der Lichtsender den ausgesandten Lichtstrahl nur innerhalb eines relativ kleinen Sendekegelwinkels aussenden. Gleichermaßen darf der Lichtempfänger auch nur einen Lichtstrahl empfangen, der innerhalb eines relativ kleinen Empfangskegelwinkels auf den Empfänger auftritt. Je kleiner der Winkel ist, desto geringer ist die Umspiegelungsgefahr. Andererseits ist der Justageaufwand beim Ausrichten des Lichtsenders auf den Lichtempfänger entsprechend erschwert und wird vom Anwender nur dann akzeptiert werden, wenn die hohe Sicherheitsanforderung dies zwingend vorschreibt. In all den Anwendungsfällen, wo diese Einschränkung hinsichtlich der Sende- und Empfangskegelwinkel von den Sicherheitsvorschriften jedoch nicht vorhanden sind, möchte der Anwender, zwecks einfacherer Justage von Lichtsender und Lichtempfänger, größere Sende- und Empfangskegelwinkel haben. Dies bedeutet letztlich, dass nach dem Stand der Technik für derartige Anwendungen alle optoelektronischen Sensoreinrichtungen in wenigstens zwei Varianten am Markt zur Verfügung stehen müssen.

Aus der US 2002/0043633 A1 ist eine Vorrichtung zur Kantendetektion von Papierseiten offenbart. Vor einer Reihe oder Matrix von Empfangselementen sind dabei Abschirmelemente mit Löchern jeweils vor den Empfangselementen vorgesehen um eine Richtung einfallender Lichtstrahlen zu begrenzen.

Aus der WO 97/26752 ist ein Lichtdetektor bekannt mit individuellen Lichsensorbereichen. Vor den Lichtsensorbereichen ist eine Maske angeordnet zur Abdeckung der Lichtsensorbereiche, wobei diese Maske mehrfache Lichtdurchlässe aufweist, die röhrenförmig ausgebildet sind.

Der Erfindung liegt die Aufgabe zugrunde, eine optoelektronische Sensoreinrichtung der eingangs genannten Art derart weiterzubilden, dass es möglich ist, mit nur einer Fertigungsvariante verschiedene Einsatzbedingungen abdecken zu können.

Erfindungsgemäß wird diese Aufgabe mit einem optoelektronischen Sensor gelöst, insbesondere Lichtschranken oder Lichtgitter, zur Erfassung eines Objektes mit einem oder mehreren Lichtsendern auf einer Seite einer Überwachungsstrecke und einem oder mehreren, mit dem Lichtsender korrespondierenden Lichtempfänger auf der anderen Seite der Überwachungsstrecke. Der oder die Lichtsender senden ein Lichtbündel mit einem Sendekegelwinkel in die Überwachungsstrecke aus und der/die Lichtempfänger nehmen das Lichtbündel innerhalb eines Empfangskegelwinkels auf und wandeln das Signal in eine elektrische Größe um, welches einer Auswerteschaltung zugeführt wird. Im Falle des Vorhandenseins eines Objektes in der Überwachungsstrecke gibt die Auswerteschaltung ein Objektfeststellungssignal ab. Eine Multilochblende ist vorgesehen, die nebeneinander in einer Ebene wenigstens zwei parallele Löcher aufweist mit einem Lochdurchmesser oder einer kleinsten Lochweite kleiner als die Lochtiefe der Löcher, wobei die Löcher parallel zur Strahlrichtung ausgerichtet werden und dem Lichtsender und/oder dem Lichtempfänger ist je eine Multilochblende zugeordnet und die Multilochblende bestimmt den Sendekegelwinkel und/oder den Empfangskegelwinkel.

Gemäß der Erfindung wird bei einer optoelektronischen Sensoreinrichtung, insbesondere einer Lichtschranke oder eines Lichtgitters, zur Erfassung eines Objektes innerhalb einer Überwachungsstrecke der Sendekegelwinkel des vom Lichtsender ausgesandten Lichtbündels und/oder der Empfangskegelwinkel des vom Lichtempfänger aufgenommen Lichtbündels mit einer Multilochblende, die am Lichtsender und/oder am Lichtempfänger angeordnet ist, verändert. Insbesondere wird gemäß der Erfindung der Sendekegelwinkel oder der Empfangskegelwinkel eingeschränkt.

Gemäß der erfindungsgemäßen Vorrichtung wird nur eine Fertigungsvariante, d. h. nur ein optoelektronischer Sensor mit zum Beispiel einem nicht begrenzten Sende- und Empfangskegelwinkel produziert, gelagert und geliefert und der Sende- und Empfangskegelwinkel ist dann mittels einer zusätzlichen Multilochblende einfach veränderbar.

Auf diese Art und Weise ist es möglich, nicht nur die Variantenvielfalt im Produktionsprozess einzuschränken, sondern auch die Lagerhaltung beim Hersteller und die Vorrathaltung beim Anwender zu verringern.

Da die erfindungsgemäße Multilochblende ohne Werkzeug und ohne separate Befestigungsmittel am Lichtsender und/oder am Lichtempfänger angebracht werden kann, ist es auch nicht erforderlich, zusätzlich Werkzeuge und entsprechende Befestigungsmittel, wie zum Beispiel Schrauben bereitstellen zu müssen, so dass eine Nachrüstung völlig unproblematisch ist.

Die Löcher der Multilochblende sind länglich ausgeführt. Im Gegensatz zu einer flachen Lochblende können nur Lichtstrahlen mit einer bestimmten Richtung die Blende passieren, wodurch ein Sende- oder Empfangskegelwinkel auf ein gewünschtes Maß eingestellt wird.

Durch die wenigstens zwei vorhandenen Löcher oder einer Vielzahl von Löchern braucht die Multilochblende nicht exakt vor dem Lichtsender und/oder dem Lichtempfänger positioniert werden, was die Nachrüstung weiter vereinfacht. Durch die Vielzahl der Löcher treffen immer genügend Lichtstrahlen für eine Objekterkennung auf den entsprechenden Empfänger.

Die geometrischen Abmessungen und Verhältnisse des Lochdurchmessers, bzw. der kleinsten Lochweite zu der Lochtiefe bestimmen zunächst den Grad der Winkeleinschränkung der Lichtstrahlen durch die Multilochblende. Je größer die Lochtiefe zu dem Lochdurchmesser bzw. der kleinsten Lochweite ist, desto stärker wird der Winkel der Lichtstrahlen eingeschränkt. Durch die Wahl der Abmessungen ist es möglich, den Sende- oder Empfangskegelwinkel beispielsweise in einem Bereich von 0,5 bis 10 Grad einzustellen. Wird beispielsweise eine hohe Umspiegelsicherheit gefordert, wird der Sende- oder Empfangskegelwinkel auf ca. 1-5° eingestellt, insbesondere 4°. Ist ein höherer Ausrichtkomfort gefordert, kann der Sende- oder Empfangskegelwinkel beispielsweise auf Winkel größer 5° eingestellt werden.

In Weiterbildung der Erfindung ist ein Abstand der Multilochblende vom Lichtsender und/oder Lichtempfänger größer als die Lochtiefe. Durch den Abstand der Multilochblende von dem Lichtsender oder Lichtempfänger wird vorteilhaft eine schiefwinklige Anordnung der Lichtsender bzw. Lichtempfänger kompensiert. Zusätzlich zu der Dimensionierung der Lochtiefe hängt der einzustellende Sende- oder Empfangskegelwinkel von dem Abstand der Multilochblende vom Lichtempfänger oder Lichtsender ab. Je größer dieser Abstand ist, desto kleiner ist der resultierende Sende- oder Empfangskegelwinkel.

In einer besonderen Ausführungsform ist der Lochdurchmesser oder die kleinste Lochweite kleiner 1 mm, insbesondere kleiner 0,1 mm. Die Lochtiefe beträgt dabei mindestens das Dreifache des Lochdurchmessers oder der kleinsten Lochweite. Dadurch sind sehr kleine Sende- oder Empfangskegelwinkel möglich und durch eine Vielzahl von eng aneinander angeordneten Löchern wird ein Wirkungsgrad des zur Verfügung stehenden Nutzlichts deutlich erhöht.

In einer weiteren besonderen Ausführungsform ist eine Fläche der Multilochblende größer als die Fläche des Lichtsenders und/oder des Lichtempfängers. Dadurch ist es nicht notwendig, die Multilochblende genau auf den Lichtsender oder Lichtempfänger auszurichten. Dadurch, dass die Anzahl der vorgesehenen Löcher, die über eine größere Fläche angeordnet sind, als die wirksame Fläche des Lichtsenders oder des Lichtempfängers, spielt die Ausrichtung quer zu Strahlrichtung keine Rolle. Lediglich die Richtung der Multilochblende gegenüber dem Lichtsender bzw. Lichtempfänger muss bei der Ausrichtung berücksichtigt werden.

In Weiterbildung der Erfindung sind mehrere Multilochblenden nebeneinander angeordnet. Eine solche Multilochblende ist für den Einsatz von Lichtgittern vorgesehen. Die Abstände der Multilochblenden entsprechen dem Strahlabstand der Lichtsender bzw. der Lichtempfänger. Vorteilhafterweise sind die mehreren Multilochblenden einstückig ausgebildet, wodurch die Löcher alle eine identische Ausrichtung aufweisen. Dadurch ist es möglich, dass eine schiefwinklige Anordnung der einzelnen Lichtsender bzw. Lichtempfänger aufgrund von Bauteiltoleranzen kompensiert wird. Durch die einstückige Ausführung der Multilochblende sind die Sende- bzw. Empfangskegelwinkel der einzelnen Lichtsender bzw. Lichtempfänger untereinander herstellungsbedingt identisch und parallel zueinander ausgerichtet, was eine kostenaufwändige Justage der Sender bzw. Empfänger zueinander überflüssig macht.

In einer weiteren Ausführungsform könnten die einzelnen Löcher der Multilochblende über einen ganzen Trägerstreifen gleichverteilt angeordnet sein, so dass bei einer Lichtgitteranwendung keine besondere Ausrichtung der Multilochblende zu den Sendern bzw. Empfängern notwendig ist.

In einer besonderen Ausführungsform ist die Multilochblende als Wabe ausgebildet. Durch eine Wabenstruktur ist eine Nutzlichtausbeute durch die im Verhältnis zu den Löchern dünnen Wänden der Wabenstruktur besonders hoch. Eine Wabenstruktur weist auch eine besonders hohe Verwindungssteifigkeit auf. Gerade bei langen Lichtgittern gewährleistet eine Multilochblende als Wabe eine gleichmäßige Sende- oder Empfangskegelwinkeleinstellung über alle Strahlen bei gleichzeitig geringem Gewicht.

In Weiterbildung der Erfindung sind die Löcher durch einen Laser herstellbar. Dadurch können die Löcher besonders klein ausgeführt werden und damit kann die Lochtiefe minimiert werden. Dadurch kann die Multilochblende besonders dünn ausgeführt werden. Bei einem Lochdurchmesser von 0,1 mm beträgt die Lochtiefe beispielsweise 0,3 bis 1 mm. Damit hat die Multilochblende nur eine maximale Tiefe von 1 mm. Dadurch kann die Multilochblende besonders platzsparend vor einem optischen Sensor angebracht werden.

In einer besonderen Ausführungsform werden wenigstens zwei Multilochblenden übereinander angeordnet, wobei durch Verschieben der Multilochblenden zueinander der optische Lochquerschnitt und/oder die optisch wirksame Gesamtlochrichtung veränderbar ist. Durch diese Anordnung können verschiedene Sende- oder Empfangskegelwinkel und/oder eine Lichteintritts- oder Lichtaustrittsrichtung mit nur einem Typ einer Multilochblende eingestellt werden. Werden die Multilochblenden deckungsgleich übereinander angeordnet, so verdoppelt sich zunächst lediglich die Lochtiefe, wodurch zunächst nur der Sende- oder Empfangskegelwinkel eingeschränkt wird. Werden die Lochblenden nun gegeneinander verschoben, so werden die optisch wirksamen Lochquerschnitte bei gleichbleibender Lochtiefe weiter verringert. Dadurch kann der Sende- oder Empfangskegelwinkel weiter eingeschränkt werden. Zusätzlich kann die Verschiebung der Sende- oder Empfangskegelwinkel in eine bestimmte Richtung verändert werden. So kann durch die Verschiebung der Multilochblende zum Lichtsender bzw. Lichtempfänger, als auch durch eine Verschiebung der Multilochblenden zueinander eine Strahlausrichtung vorgenommen werden. Insbesondere kann dadurch der Einfluss von spiegelnden Flächen minimiert werden.

In einer weiteren Ausführungsform ist die Multilochblende als Frontscheibe ausgebildet. Dadurch kann die Frontscheibe und Multilochblende zusammen einstückig ausgebildet werden. Die Löcher der Multilochblende werden im einfachsten Fall mit transparentem Material gefüllt. Dadurch weist die Multilochblende eine geschlossene Oberfläche auf, um den Sensor vor Schmutz und Feuchtigkeit zu schützen. Weiter sind durch diese Maßnahme die Löcher der Multilochblende vor Verschmutzungen geschützt.

In Weiterbildung der Erfindung sind an der Multilochblende separate Befestigungsmittel angebracht, mit der die Multilochblende mit den Lichtsendern und/oder dem Lichtempfänger und/oder einem Gehäuse verbindbar ist. Dadurch kann die Multilochblende einfach an bestehenden optischen Sensoren nachgerüstet werden. Die Befestigungsmittel sind beispielsweise an einer bestehenden Profil- oder Gehäuseform des optischen Sensors angepasst. Beispielswiese sind an der Multilochblende und an dem Lichtsender bzw. Lichtempfänger Rast- und/oder Klemmelemente vorgesehen, über die die Multilochblende mit dem Lichtsender/Lichtempfänger verbindbar ist. Hierzu kann beispielsweise eine vorhandene seitliche Nut des Lichtgitters genutzt werden, in die die Befestigungsmittel eingreifen. Auf diese Weise ist es möglich, die Multilochblende mit dem Gehäuse durch ein einfaches Einschnappen oder Einrasten zu befestigen.

In einer weiteren Ausführungsform ist die Multilochblende in Form einer Folie ausgeführt. Eine Folie ist besonders einfach herstellbar. Die Löcher der Multilochblende werden direkt bei der Folienherstellung gebildet oder in einem anschließenden Schritt durch einen Laser in die Folie gebrannt. Die Folie kann als endlose Meterware hergestellt werden, die je nach Bedarf ablängbar und verwendbar ist. Hierzu ist die Folie mit einer selbstklebenden Fläche auf einer Abschlussscheibe befestigbar. Die Folie kann also als einfaches Klebeband auf einen Sensor aufgebracht werden. Eine derartige Folie ist nicht nur sehr preiswert herstellbar, sondern hat neben der optischen Richtcharakteristik gleichzeitig eine mechanische Schutzwirkung für die Abschlussscheibe. D. h. bei mechanischer Beschädigung oder Verschmutzung kann die insbesondere als selbstklebende Folie ausgeführte Multilochblende einfach ausgewechselt werden.

In Weiterbildung der Erfindung ist die Multilochblende ein extrudiertes Kunststoffteil oder ein Spritzgussteil. Für lange Lichtgitter ist es vorteilhaft, den Träger als extrudiertes Kunststoffteil herzustellen und die Löcher in einem weiteren Bearbeitungsschritt herzustellen. Für den Einsatz in einer Einzelstrahllichtschranke ist es besonders einfach, die Multilochblende als Spritzgussteil inklusive der vorgesehenen Löcher herzustellen. Dadurch kann die Multilochblende besonders einfach hergestellt werden. Auch mögliche zur Befestigung notwendige Rastrippen können hierbei bereits vorgesehen werden.

Im Folgenden wird die Erfindung an Hand von Ausführungsbeispielen unter Bezugnahme auf die Zeichnung im Einzelnen erläutert.
In der Zeichnung zeigen:
- Figur 1: eine Ausrichtung einer Lichtschranke oder eines Lichtgitters nach dem Stand der Technik;
- Figur 2: eine Umspiegelung eines Lichtstrahls an einer Fläche;
- Figur 3: eine schematische Darstellung einer erfindungsgemäßen Multilochblende;
- Figur 4: eine erfindungsgemäße Multilochblende für ein Lichtgitter;
- Figur 5: ein Lichtgitter mit angeordneter Multilochblende;
- Figur 6: eine perspektivische Ansicht eines Lichtgittergehäuses mit der Multilochblende;
- Figur 7 und 8: zwei Multilochblenden, die gegeneinander verschoben sind;
- Figur 9 und 10: jeweils eine Multilochblende als Wabe.

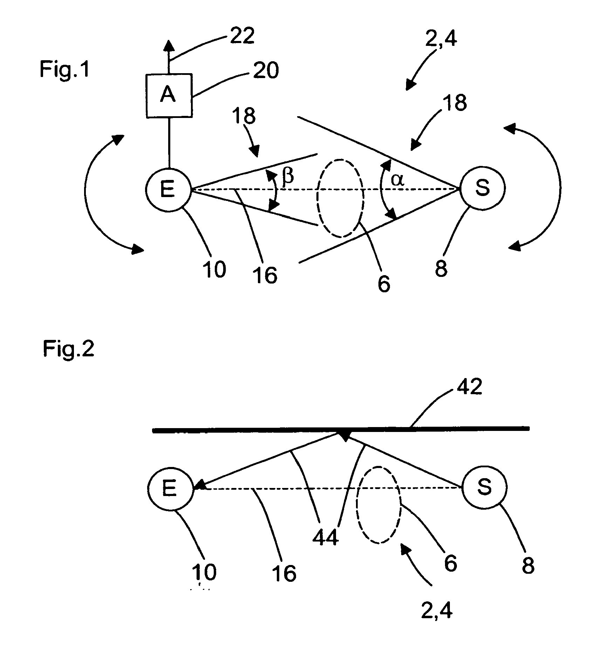

Die Figur 1 zeigt einen optoelektronischen Sensor 1, beispielsweise ein Lichtgitter 4 oder eine Lichtschranke 2 mit einem Lichtsender 8 auf einer Seite einer Überwachungsstrecke 16 und einem Lichtempfänger 10 auf der anderen Seite der Überwachungsstrecke 16. Das aus dem Lichtsender 8 ausgesandte Licht tritt als ein divergentes Lichtbündel 18 mit einem Sendekegelwinkel α aus dem Lichtsender 8 aus. Der Lichtempfänger 10 auf der gegenüberliegenden Seite der Überwachungsstrecke 16 empfängt alles Licht, das innerhalb eines Empfangskegelwinkels β auftrifft. Die optische Sendeachse und die optische Empfangsachse sind in Fig. 1 exakt zueinander ausgerichtet, so dass das divergente Lichtbündel 18 des Lichtsenders den Lichtempfänger symmetrisch überleuchtet. Befindet sich ein Objekt 6 zwischen dem Lichtsender 8 und dem Lichtempfänger 10, wird der Lichtweg unterbrochen und von einer Auswerteeinheit 20, welche die Lichtempfängersignale auswertet, ein entsprechendes Objektfeststellungssignal 22 ausgegeben.

Bei einem Lichtgitter sind in einem ersten Gehäuse mehrere Lichtsender auf einer Seite einer Überwachungsfläche und in einem zweiten Gehäuse mehrere Lichtempfänger auf der anderen Seite der Überwachungsfläche angeordnet. Dabei sendet, in kurzer zeitlicher Folge abwechselnd, immer ein Lichtsender Lichtimpulse auf einen zugehörigen Lichtempfänger paarweise, so dass letztlich nicht nur eine einzelne Linie, sondern eine Fläche streifenförmig überwacht wird. Die einzelnen Lichtsender bzw. Lichtempfänger sind dabei um einen Abstand versetzt in einem jeweiligen Gehäuse angeordnet.

Figur 2 zeigt eine entsprechende Anordnung gemäß Figur 1 mit dem Lichtempfänger 10 auf einer Seite und dem zugehörigen Lichtsender 8. Innerhalb der Überwachungsstrecke 16 befindet sich das Objekt 6, das durch den optoelektronischen Sensor 1 detektiert werden soll. Parallel zu der Überwachungsstrecke 16 oder Überwachungsfläche des optoelektronischen Sensors 1 befindet sich eine spiegelnde Fläche 42, beispielsweise eine metallische Fläche eines Maschinenteils. An dieser metallischen Fläche 42 werden nun Randlichtstrahlen 44 des Lichtsenders 8 umgelenkt und treffen auf den Lichtempfänger 10. Somit wird das zu detektierende Objekt 6 umspiegelt. Dies führt dazu, dass eine Detektion eines Objekteingriffs oder eine Erkennung eines zu vermessenden Objektes 6 unterbleibt oder fehlerhaft ist. Erfindungsgemäß kann diese Umspiegelung durch eine erfindungsgemäße Multilochblende verhindert werden.

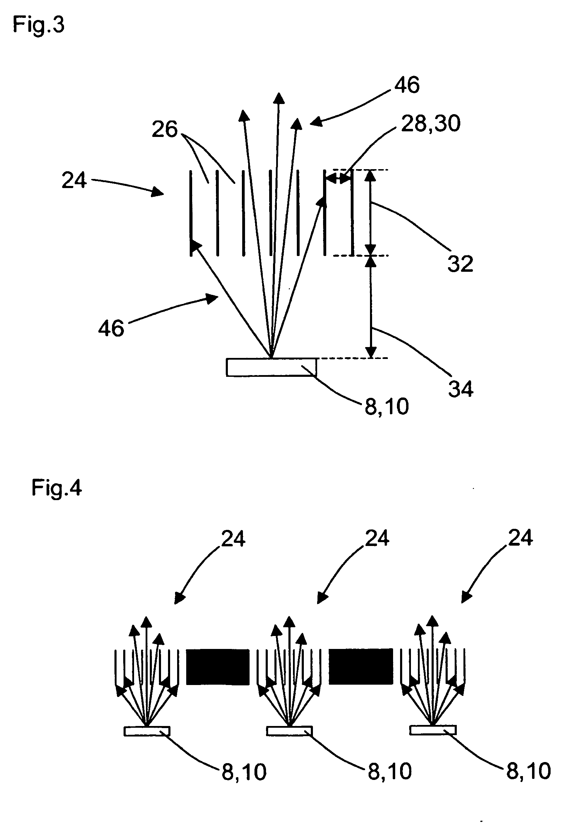

Figur 3 zeigt die schematische Darstellung einer Multilochblende 24 in einem Abstand 34 vor einem Lichtsender 8 oder einem Lichtempfänger 10. Die Multilochblende 24 weist mehrere parallel, nebeneinander in einer Ebene zueinander angeordnete Löcher 26 auf. Der Lochdurchmesser 28 ist dabei geringer als eine Lochtiefe 32. Ein divergentes Strahlbündel, ausgehend von dem Lichtsender 8 oder ein eintretendes Strahlenbündel auf einen Lichtempfänger 10, wird durch die Multilochblende 24 eingeschränkt. Durch die Multilochblende 24 können jeweils nur die Lichtstrahlen 46 hindurchtreten, die einen kleinen Divergenzwinkel aufweisen. Je nach Ausführung der Lochtiefe 32 zu dem Lochdurchmesser 28 und einem Abstand 34 der Multilochblende 24 zu dem Lichtsender 8 oder Lichtempfänger 10 kann ein entsprechender Divergenzwinkel eingestellt werden. Je kleiner der Lochdurchmesser 28 und je größer die Lochtiefe 32 zueinander gewählt wird, desto kleiner wird der erlaubte Divergenzwinkel für die durchtretenden Lichtstrahlen 46. Der Divergenzwinkel ist weiter auch beeinflussbar über den Abstand 34 der Multilochblende 24 von dem entsprechenden Lichtsender 8 oder Lichtempfänger 10. Abhängig von den baulichen Gegebenheiten des optoelektronischen Sensors 1 werden die Abmessungen der Multilochblende 24 entsprechend angepasst. Durch die Multilochblende 24 kann beispielsweise ein Divergenzwinkel sicherheitstechnischer Sensoren in einem Bereich von +-2,5° bis +-5° eingestellt werden. Jedoch ist es auch möglich, den Divergenzwinkel auf +-10 bis +-20° einzustellen bei entsprechender Anforderung. Dadurch wird eine entsprechende Ausrichtung des Lichtsenders 8, beziehungsweise des Lichtempfängers 10 erleichtert. Jedoch es auch möglich, sehr kleine Divergenzwinkel, beispielsweise von einem Grad oder kleiner, einzustellen. Dies ist von Vorteil, wenn störende Grenzflächen besonders nahe an der Überwachungsstrecke angeordnet sind.

Figur 4 zeigt eine Mehrfachanordnung der Multilochblende 24 für ein Lichtgitter. Vor jedem Lichtsender 8 beziehungsweise Lichtempfänger 10 eines solchen Lichtgitters ist jeweils eine Multilochblende 24 angeordnet. Die Multilochblenden 24 werden in einem einstückigen Träger ausgebildet, die Zwischenräume zwischen den Multilochblenden müssen keine Löcher aufweisen. Jedoch ist es auch vorgesehen, dass diese Zwischenräume auch entsprechende Löcher aufweisen, wodurch eine genaue Ausrichtung der Multilochblende 24 auf den jeweiligen Lichtsender 8 beziehungsweise Lichtempfänger 10 entfällt. Es ist lediglich notwendig, dass die Löcher der Multilochblende 24 parallel in Strahlrichtung ausgerichtet werden. Sollten die einzelnen Lichtsender 8 beziehungsweise Lichtempfänger 10 des Lichtgitters schiefwinklig angeordnet sein, aufgrund von Bauteiltoleranzen oder Fertigungstoleranzen, wird diese Schiefwinkligkeit durch die erfindungsgemäße Multilochblende 24 ausgeglichen. So ist es möglich, den Fertigungsprozess eines solchen Lichtgitters zu vereinfachen, wobei höhere Toleranzen der einzelnen Lichtsender 8 beziehungsweise Lichtempfänger 10 zulässig sind und auch höhere Toleranzen bei der Bestückung der Bauteile. Der notwendige Divergenzwinkel wird dann erst durch die Multilochblende 24 festgelegt.

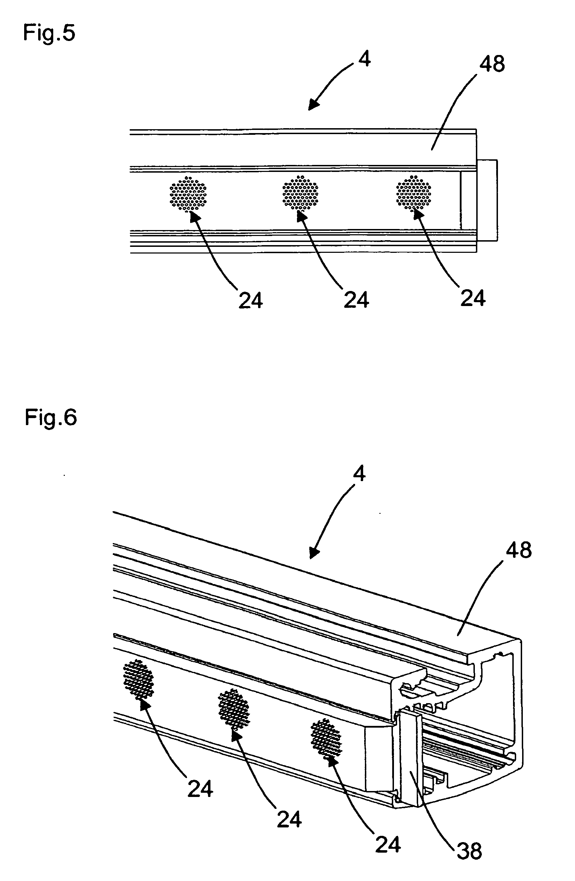

Figur 5 zeigt die erfindungsgemäße Multilochblende 24 an einem Lichtgittergehäuse 48. Im Bereich der Lichtsender beziehungsweise Lichtempfänger sind die jeweiligen Multilochblenden 24 angeordnet. Die Multilochblende 24 ist hierbei vorteilhaft einstückig ausgebildet, wobei die Löcher beispielsweise durch einen Laser in ein Trägermaterial geschnitten werden. Bei dem Trägermaterial handelt es sich vorzugsweise um Kunststoff, beispielsweise Polymethylmethacrylat PMMA oder Polycarbonat PC. Diese Kunststoffe sind besonders robust gegenüber Umwelteinflüssen und lassen sich besonders einfach bearbeiten. Nach einer besonderen Ausführungsform wird ein schwarzes Trägermaterial für die Herstellung der Multilochblende 24 verwendet. Dies hat den Vorteil, dass Licht, welches an den Innenwänden der Löcher auftrifft, absorbiert wird. Besonders vorteilhaft ist es, wenn die Innenwände eine raue nichtreflektierende Oberfläche aufweisen. Hierdurch entstehen innerhalb der Löcher keine nachteiligen Reflexionen. Abhängig von dem gewünschten Divergenzwinkel, von der Lochtiefe bei einer Tiefe von verwendetem Trägermaterial, wird die Lochweite oder ein Lochdurchmesser beispielsweise kleiner 1 mm oder kleiner 0,1 mm gewählt. Lochdurchmesser größer 0,5 mm lassen sich beispielsweise einfach im Spritzgussverfahren herstellen. Kleinere Lochdurchmesser werden durch einen Laser hergestellt.

Figur 6 zeigt eine perspektivische Ansicht eines Lichtgittergehäuses 48 mit der erfindungsgemäßen Multilochblende 24. Die Multilochblende 24 ist dabei von Außen auf eine Frontscheibe 38 aufgebracht. Ein solches Lichtgitter 4 kann beispielsweise durch eine Multilochblende 24 nachgerüstet werden. Beispielsweise wird die Multilochblende 24 auf die Frontscheibe 38 aufgeklebt oder durch eine besondere Befestigungsvorrichtung, beispielsweise durch Klemmelemente oder Rastelemente an dem Lichtgittergehäuse 48 befestigt. Die Multilochblende 24 kann auch als Ersatz für die Frontscheibe 38 in dem Lichtgitter vorgesehen sein. In dieser besonderen Ausführungsform werden die Löcher der Multilochblende 24 durch einen transparenten Kunststoff gefüllt, so dass eine staub- und flüssigkeitsdichte Frontscheibe 38 entsteht. Eine solche Frontscheibe 38 kann beispielsweise einfach durch ein Zwei- oder Mehrkomponenten Spritzgussverfahren hergestellt werden.

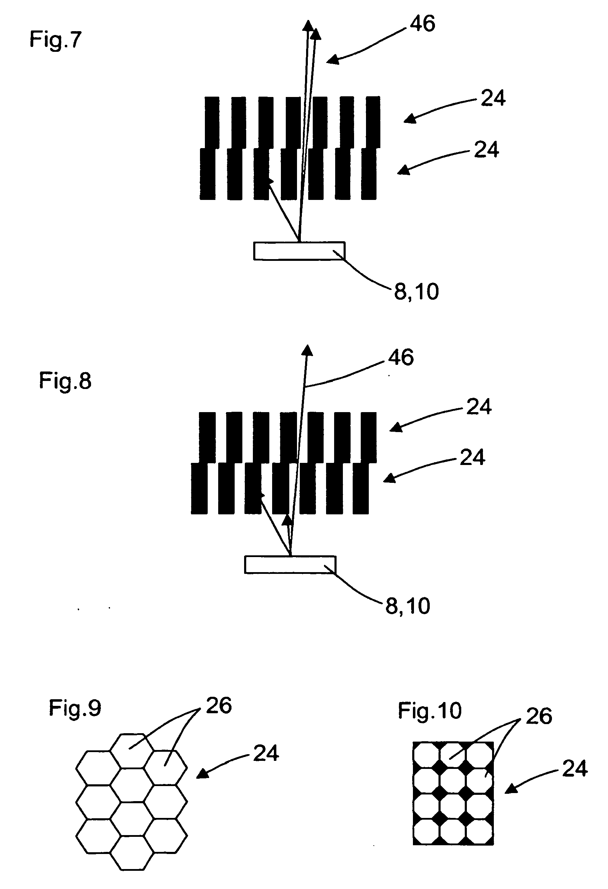

In Figur 7 ist eine weitere Ausführungsform der Multilochblende 24 dargestellt. Dabei sind zwei Multilochblenden 24 verschiebbar übereinander angeordnet. Durch die Verschiebung der beiden Multilochblenden 24 zueinander kann eine effektive Querschnittsfläche der Löcher verändert werden. Zusätzlich kann auch die Richtung der erlaubten Lichtstrahlen 46 verändert werden. Durch die Verschiebung der beiden Multilochblenden 24 zueinander kann ein vorgesehener Divergenzwinkel weiter verringert werden. Dies ist beispielsweise notwendig, wenn ein Divergenzwinkel direkt an eine bestimmte Anwendung angepasst werden muss, beispielsweise um hohe Anforderungen an eine Spiegelsicherheit zu gewährleisten.

Figur 9 und 10 zeigen eine weitere Ausführungsform der Multilochblende 24. Figur 9 zeigt eine Wabenstruktur mit sechseckigen Lochquerschnitten der Löcher 26 und Figur 10 zeigt eine Multilochblende 24 mit einem achteckigen Lochquerschnitt. Diese Formen sind bei minimalem Materialaufwand besonders stabil und verwindungssteif.

### Bezugszeichen:

- 1: Optoelektronischer Sensor
- 2: Lichtschranke
- 4: Lichtgitter
- 6: Objekt
- 8: Lichtsender
- 10: Lichtempfänger
- α: Sendekegelwinkel
- β: Empfangskegelwinkel
- 16: Überwachungsstrecke
- 18: Lichtbündel
- 20: Auswerteschaltung
- 22: Objektfeststellungssignal
- 24: Multilochblende
- 26: Loch
- 28: Lochdurchmesser
- 30: Lochweite
- 32: Lochtiefe
- 34: Abstand
- 36: Wabe
- 38: Frontscheibe
- 42: Spiegelfläche
- 44: Randlichtstrahlen
- 46: Lichtstrahlen
- 48: Lichtgittergehäuse

## Patentansprüche

1. Optoelektronischer Sensor nämlich Lichtgitter (4), zur Erfassung eines Objektes (6) mit mehreren Lichtsendern (8) auf einer Seite einer Überwachungsstrecke (16) und mehreren, mit den Lichtsendern (8) korrespondierenden Lichtempfängern (10) auf der anderen Seite der Überwachungsstrecke (16), wobei die Lichtsender (8) ein Lichtbündel (18) mit einem Sendekegetwinkel (α) in die Überwachungsstrecke aussenden und die Lichtempfänger (10) das Lichtbündel (18) innerhalb eines Empfangskegelwinkels (β) aufnehmen, in eine elektrische Größe wandelt und einer Auswerteschaltung (20) zuführt, die im Falle des Vorhandenseins eines Objektes (6) in der Überwachungsstrecke (16) ein Objektfeststellungssignal (22) abgibt, wobei eine Multilochblende (24) vorgesehen ist, die nebeneinander in einer Ebene wenigstens zwei parallele Löcher (26) aufweist mit einem Lochdurchmesser (28) oder einer kleinsten Lochweite (30) kleiner als die Lochtiefe (32) der Löcher (26), wobei die länglich ausgeführten Löcher parallel zur Überwachungsstrecke (16) ausgerichtet werden und dem Lichtsender (8) und/oder Lichtempfänger (10) je eine Multilochblende (24) zugeordnet ist , **dadurch gekennzeichnet, dass** der Sendekegetwinkel (α) bzw der Empfangskegelwinkel (β) in einem Bereich von 0,5 bis 10 Grad eingestellt ist und eine Fläche der Multilochblende (24) größer als die wirksame Fläche des Lichtsenders (8) und/oder des Lichtempfängers (10) ist.

2. Optoelektronischer Sensor nach Anspruch 1, wobei ein Abstand der Multilochblende (24) vom Lichtsender (8) und/oder Lichtempfänger (10) größer als die Lochtiefe (32) ist.

3. Optoelektronischer Sensor nach einem der vorhergehenden Ansprüche, wobei der Lochdurchmesser (28) oder die kleinste Lochweite (30) kleiner 1 mm oder kleiner 0,1 mm ist.

4. Optoelektronischer Sensor nach einem der vorhergehenden Ansprüche, wobei mehrere Multilochblenden (24) nebeneinander angeordnet sind und die Multilochblende (24) einstückig ausgebildet ist.

5. Optoelektronischer Sensor nach einem der vorhergehenden Ansprüche, wobei die Multilochblende (24) als Wabe (36) ausgebildet ist.

6. Optoelektronischer Sensor nach einem der vorhergehenden Ansprüche, wobei die Löcher (26) durch einen Laser herstellbar sind.

7. Optoelektronischer Sensor nach einem der vorhergehenden Ansprüche, wobei wenigstens zwei Multilochblenden (26) übereinander angeordnet sind, wobei durch Verschieben der Multilochblenden (26) zueinander ein Lochquerschnitt und/oder eine Lochrichtung veränderbar ist.

8. Optoelektronischer Sensor nach einem der vorhergehenden Ansprüche, wobei die Multilochblende (24) als Frontscheibe (38) ausgebildet ist.

9. Optoelektronischer Sensor nach einem der vorhergehenden Ansprüche, wobei an der Multilochblende (24) separate Befestigungsmittel angebracht sind, mit der die Multilochblende (24) mit den Lichtsendern (8) und/oder dem Lichtempfänger (10) und/oder einem Gehäuse verbindbar ist.

10. Optoelektronischer Sensor nach einem der vorhergehenden Ansprüche, wobei an der Multilochblende (24) und an dem Lichtsender (8) und/oder Lichtempfänger (10) und/oder Gehäuse Rastund/oder Klemmelemente vorgesehen sind, über die die Multilochblende (24) mit dem Lichtsender (8) und/oder Lichtempfänger (10) verbindbar ist.

11. Optoelektronischer Sensor nach einem der vorhergehenden Ansprüche, wobei die Multilochblende (24) in Form einer Folie ausgeführt ist.

12. Optoelektronischer Sensor nach Anspruch 13. wobei die Folie mit einer selbstklebenden Fläche auf einer Frontscheibe (38) befestigbar ist.

13. Optoelektronischer Sensor nach einem der vorhergehenden Ansprüche, wobei ein Träger der Multilochblende (24) ein extrudiertes Kunststoffteil oder ein Spritzgussteil ist.

## Claims

1. An optoelectronic sensor, namely a light grid (4), for detecting an object (6) having a plurality of light transmitters (8) on one side of a monitored path (16) and a plurality of light receivers (10) corresponding to the light transmitter (8) on the other side of the monitored path (16), wherein the light transmitters (8) transmit a light beam (18) having a transmission cone angle (α) into the monitored path and the light receivers (10) receive the light beam (18) within a reception cone angle (β), convert it into an electric value and supply it to an evaluation circuit (20) which, in the case of the presence of an object (6) in the monitored path (16), outputs an object detection signal (22), wherein a multi-aperture diaphragm (24) is provided which has at least two parallel holes (26) next to one another in one plane which have a hole diameter (28) or a smallest hole width (30) smaller than the hole depth (32) of the holes (26), wherein the elongate holes are aligned parallel to the monitored path (16) and one respective multi-aperture diaphragm (24) is associated with the light transmitter (8) and/or the receiver (10), **characterised in that** the transmission cone angle (α) or the reception cone angle (β) is set in a range from 0.5 to 10 degrees and one surface of the multi-aperture diaphragm (24) is larger than the effective surface of the light transmitter (8) and/or of the light receiver (10).

2. An optoelectronic sensor in accordance with claim 1, wherein a spacing of the multi-aperture diaphragm (24) from the light transmitter (8) and/or light receiver (10) is larger than the hole depth (32).

3. An optoelectronic sensor in accordance with one of the preceding claims, wherein the hole diameter (28) or the smallest hole width (30) is smaller than 1 mm or smaller than 0.1 mm.

4. An optoelectronic sensor in accordance with any one of the preceding claims, wherein a plurality of multi-aperture diaphragms (24) are arranged next to one another and the multi-aperture diaphragm (24) is made on one piece.

5. An optoelectronic sensor in accordance with any one of the preceding claims, wherein the multi-aperture diaphragm (24) is made as a honeycomb (36).

6. An optoelectronic sensor in accordance with any one of the preceding claims, wherein the holes (26) can be manufactured by a laser.

7. An optoelectronic sensor in accordance with any one of the preceding claims, wherein at least two multi-aperture diaphragms (26) are arranged over one another, wherein at least one hole cross-section and/or one hole direction can be changed by displacing the multi-aperture diaphragms (26).

8. An optoelectronic sensor in accordance with any one of the preceding claims, wherein the multi-aperture diaphragm (24) is made as a front screen (38).

9. An optoelectronic sensor in accordance with any one of the preceding claims, wherein separate fastening means are attached to the multi-aperture diaphragm (24) by which the multi-aperture diaphragm aperture (24) can be connected to the light transmitters (8) and/or to the light transmitter (10) and/or to a housing.

10. An optoelectronic sensor in accordance with any one of the preceding claims, wherein latching elements and/or clamping elements are provided at the multi-aperture diaphragm (24) and at the light transmitter (8) and/or light receiver (10) and/or housing via which the multi-aperture diaphragm (24) can be connected to the light transmitter (8) and/or light receiver (10).

11. An optoelectronic sensor in accordance with any one of the preceding claims, wherein the multi-aperture aperture (24) is designed in the form of a film.

12. An optoelectronic sensor in accordance with claim 13, wherein the film can be fastened by a self-adhering surface to a front screen (38).

13. An optoelectronic sensor in accordance with any one of the preceding claims, wherein a carrier of the multi-aperture diaphragm (24) is an extruded plastic part or an injection moulded part.

## Revendications

1. Capteur optoélectronique, à savoir grillage lumineux (4) pour la détection d'un objet (6), comprenant plusieurs émetteurs de lumière (8) sur un côté d'un trajet de surveillance (16) et plusieurs récepteurs de lumière (10), correspondants à l'émetteur de lumière (8), de l'autre côté du trajet de surveillance (16), dans lequel les émetteurs de lumière (8) émettent un faisceau de lumière (18) avec un cône d'émission d'angle (α) dans le trajet de surveillance, et les émetteurs de lumière (10) reçoivent le faisceau de lumière (18) à l'intérieur d'un cône de réception d'angle (β), les transforme en une grandeur électrique et les amène à un circuit d'évaluation (20) qui, en cas de présence d'un objet (6) dans le trajet de surveillance (16), envoie un signal de constatation d'objet (22), dans lequel il est prévu un cache à trous multiples (24) qui présente au moins deux trous parallèles (26) côte à côte dans un plan, avec un diamètre de trou (28), ou une plus petite largeur de trou (30) inférieur(e) à la profondeur (32) des trous (26), tels que les trous réalisés oblongs sont orientés parallèlement au trajet de surveillance (16), et un cache à trous multiples (24) est associé respectivement à l'émetteur de lumière (8) et/ou au récepteur de lumière (10), **caractérisé en ce que** l'angle (α) du cône d'émission ou l'angle (β) du cône de réception est réglé dans une plage de 0,5 à 10° et une surface du cache à trous multiples (24) est supérieure à la surface efficace de l'émetteur de lumière (8) et/ou du récepteur de lumière (10).

2. Capteur optoélectronique selon la revendication 1, dans lequel une distance du cache à trous multiples (24) depuis l'émetteur de lumière (8) et/ou le récepteur de lumière (10) est supérieure à la profondeur des trous (32).

3. Capteur optoélectronique selon l'une des revendications précédentes, dans lequel le diamètre des trous (28) ou la plus petite largeur (30) des trous est inférieur(e) à 1 mm ou inférieur(e) à 0,1 mm.

4. Capteur optoélectronique selon l'une des revendications précédentes, dans lequel plusieurs caches à trous multiples (24) sont agencés les uns à côté des autres, et le cache à trous multiples (24) est réalisé d'une seule pièce.

5. Capteur optoélectronique selon l'une des revendications précédentes, dans lequel le cache à trous multiples (24) est réalisé sous forme de nid d'abeilles (36).

6. Capteur optoélectronique selon l'une des revendications précédentes, **caractérisé en ce que** les trous (26) peuvent être réalisés par un laser.

7. Capteur optoélectronique selon l'une des revendications précédentes, dans lequel au moins deux caches à trous multiples (26) sont agencés l'un au-dessus de l'autre, et par déplacement des caches à trous multiples (26) l'un par rapport à l'autre, une section et/ou une direction des trous peut être modifiée.

8. Capteur optoélectronique selon l'une des revendications précédentes, dans lequel le cache à trous multiples (24) est réalisé sous forme de plaque frontale (38).

9. Capteur optoélectronique selon l'une des revendications précédentes, dans lequel des moyens de fixation séparés sont montés sur le cache à trous multiples (24), au moyen desquels le cache à trous multiples (24) peut être relié aux émetteurs de lumière (8) et/ou au récepteur de lumière (10) et/ou à un boîtier.

10. Capteur optoélectronique selon l'une des revendications précédentes, dans lequel des éléments d'enclenchement et/ou de coincement sont prévus sur le cache à trous multiples (24) et sur l'émetteur de lumière (8) et/ou sur le récepteur de lumière (10) et/ou sur le boîtier, via lesquels le cache à trous multiples (24) peut être relié à l'émetteur de lumière (8) et/ou au récepteur de lumière (10).

11. Capteur optoélectronique selon l'une des revendications précédentes, dans lequel le cache à trous multiples (24) est réalisé sous la forme d'un film.

12. Capteur optoélectronique selon la revendication 13, dans lequel le film est susceptible d'être fixé sur une plaque frontale (38) avec une surface autocollante.

13. Capteur optoélectronique selon l'une des revendications précédentes, dans lequel un support du cache à trous multiples (24) est une pièce en matière plastique extrudée ou une pièce moulée par injection.
